# DEMANDE DE BREVET EUROPEEN

(11) **EP 4 186 633 A1**
(43) Date de publication de la demande: **31.05.2023**
(21) Numéro de dépôt: 22206657.3
(22) Date de dépôt: 10.11.2022
(51) Int. Cl.: B23K 26/342, B33Y 10/00, B33Y 80/00, B33Y 70/00, B33Y 50/02, B23K 15/00, B23K 103/14

(54) **PROCÉDÉ DE FABRICATION ADDITIVE PAR DÉPÔT DE MATIÈRE SOUS ÉNERGIE FOCALISÉE UTILISANT DES FILS DE SECTIONS DIFFÉRENTES ET PIÈCE OBTENUE À PARTIR DUDIT PROCÉDÉ**

(30) Priorité: 24.11.2021 FR 2112440
(71) Demandeur: AIRBUS OPERATIONS (S.A.S.), 31060 Toulouse (FR)
(72) Inventeur: SICRE, Matthieu, 31060 Toulouse (FR)
(74) Mandataire: Fantin, Laurent

(57) **Abrégé**

L'invention a pour objet un procédé de fabrication additive, par dépôt de matière sous énergie focalisée, permettant d'obtenir une pièce (20) par fusion de fils (24, 24') grâce à une source d'énergie focalisée, ladite pièce (20) comportant au moins une zone principale (30) réalisée à partir d'au moins un premier fil (24) qui présente une première section transversale de diamètre supérieur ou égal à 2 mm ainsi qu'au moins une zone périphérique (32) réalisée à partir d'au moins un deuxième fil (24') qui présente une deuxième section transversale différente et inférieure de la première section transversale du premier fil (24), ladite zone périphérique (32) recouvrant au moins partiellement une surface libre (S20) de la pièce (20). Ce procédé permet de maintenir une cadence de production élevée tout en réduisant l'amplitude des ondulations de la surface libre (S20) de la pièce (20) recouverte par la zone périphérique (32).

## Description

La présente demande se rapporte à un procédé de fabrication additive par dépôt de matière sous énergie focalisée utilisant des fils de sections différentes ainsi qu'à une pièce obtenue à partir dudit procédé.

Dans le domaine aéronautique, certaines pièces en titane, comme une structure primaire d'un mât d'un réacteur, sont réalisées en assemblant plusieurs pièces complexes usinées dans des blocs de matière. Cette technique de fabrication est relativement longue et génère beaucoup de pertes de matière sous forme de copeaux de titane qui ne peuvent pas être réutilisés. Pour réduire la quantité de déchets, les procédés de fabrication additive permettent de réaliser des pièces en empilant des couches de matière les unes sur les autres.

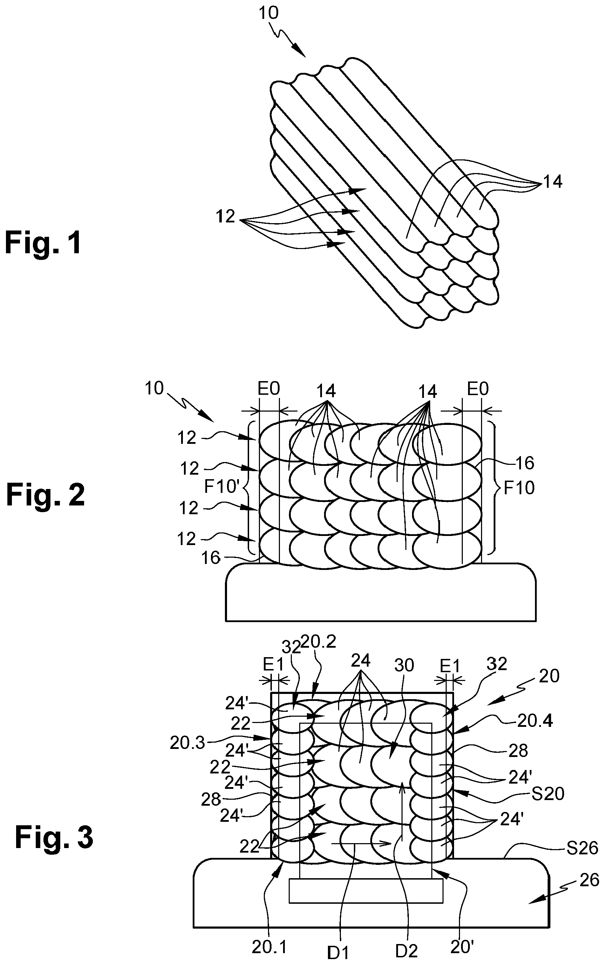

Selon un mode de réalisation illustré par les figures 1 et 2, une pièce 10 est réalisée en empilant des couches de matière 12 obtenue par fusion d'une matière en utilisant une source d'énergie focalisée, comme un faisceau laser ou un faisceau d'électrons par exemple. Selon une technique dite par dépôt de matière sous énergie focalisée (appelée également DED pour « Directed Energy Déposition » en anglais), la matière sous forme de fils 14 est déposée simultanément à l'apport d'énergie.

Ainsi, chaque couche de matière 12 est obtenue en juxtaposant plusieurs fils 14 de même section.

Le taux de matière déposée dépendant du diamètre du fil 14 déposé et de sa vitesse de dévidage, pour obtenir un taux de matière déposée et une cadence de production élevée, il est nécessaire d'utiliser un fil avec une section importante, supérieure à 1 mm.

Comme illustré sur les figures 1 et 2, la pièce 10 obtenue présente sur ses faces latérales F10, F10' des ondulations 16 avec des rayons sensiblement identiques à ceux des fils 14. Par conséquent, la pièce 10 doit être rectifiée pour aplanir les faces latérales F10, F10'. L'épaisseur E0 de matière retirée lors de cette étape de rectification est d'autant plus importante que les rayons des ondulations 16 sont importants.

Il est possible de réduire l'épaisseur de matière retirée lors de cette étape de rectification en réalisant la pièce 10 à partir de fils avec une section réduite. Toutefois, cela conduit à fortement réduire la cadence de production.

La présente invention vise à remédier à tout ou partie des inconvénients de l'art antérieur.

A cet effet, l'invention a pour objet un procédé de fabrication additive, par dépôt de matière sous énergie focalisée, d'une pièce comportant des couches de matière obtenues par fusion de fils grâce à une source d'énergie focalisée, chaque couche de matière comportant plusieurs fils juxtaposés déposés selon une direction de pose, la pièce obtenue comportant une surface libre.

Selon l'invention, le procédé de fabrication additive permet d'obtenir une pièce comportant au moins une zone principale réalisée à partir d'au moins un premier fil présentant une première section transversale de diamètre supérieur ou égal à 1 mm ainsi qu'au moins une zone périphérique réalisée à partir d'au moins un deuxième fil présentant une deuxième section transversale circulaire et présentant un diamètre inférieur ou égal à un coefficient de 0,8 fois le diamètre du premierfil, ladite zone périphérique recouvrant au moins partiellement la surface libre de la pièce. En complément, plus le premier fil présente un diamètre important et plus le coefficient est réduit.

Ce procédé permet de maintenir une cadence de production élevée tout en réduisant l'amplitude des ondulations de la surface libre de la pièce recouverte par la zone périphérique obtenue à partir de fils de diamètre réduit.

Selon une autre caractéristique, la première section transversale du premier fil présente un diamètre compris entre 1 et 8 mm. En complément, la deuxième section transversale du deuxième fil présente un diamètre compris entre 0,8 et 3,2 mm.

Selon une autre caractéristique, la pièce présente une première face en contact avec une surface d'un support, une deuxième face correspondant à une face d'une dernière couche de matière déposée, opposée à ladite première face, ainsi que des première et deuxième faces latérales reliant les première et deuxième faces. En complément, la pièce comprend deux zones périphériques, une pour chacune des première et deuxième faces latérales de la pièce. Selon une autre caractéristique, les deux zones périphériques recouvrent la totalité des première et deuxième faces latérales.

Selon une autre caractéristique, le procédé utilise un premier jeu de paramètres pour déposer les premiers fils, permettant d'obtenir une cadence de production élevée, ainsi qu'un deuxième jeu de paramètres, différent du premier, pour déposer les deuxièmes fils.

Selon une autre caractéristique, le procédé comprend plusieurs étapes de réalisation d'une couche de premiers fils, lors de chacune desquelles des premiers fils sont juxtaposés les uns à côté des autres, ainsi que plusieurs étapes de pose des deuxièmes fils, une étape après chaque étape de réalisation d'une couche de premiers fils, lors de chacune desquelles au moins un deuxième fil est posé à chacune des extrémités de la couche de premiers fils juste réalisée. Selon une autre caractéristique, le procédé comprend une première étape de réalisation d'un empilage de couches de premiers fils lors de laquelle toutes les couches de la zone principale sont réalisées puis, pour chacune des zones périphériques, une étape de pose des deuxièmes fils.

Selon une autre caractéristique, la pièce est orientée d'une première manière lors de la première étape de réalisation de l'empilage des couches de premiers fils de la zone principale. A l'issue de cette première étape, la pièce est pivotée de manière à ce que la face latérale à recouvrir de deuxièmes fils soit horizontale et orientée vers le haut lors d'une première étape de pose des deuxièmes fils d'une première zone périphérique. A l'issue de cette première étape de pose des deuxièmes fils de la première zone périphérique, la pièce est pivotée de manière à ce que la face latérale à recouvrir de deuxièmes fils soit horizontale et orientée vers le haut lors d'une deuxième étape de pose des deuxièmes fils d'une deuxième zone périphérique.

L'invention a également pour objet une pièce obtenue à partir du procédé de fabrication additive selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue en perspective d'une pièce obtenue par un procédé de fabrication additive par dépôt de matière sous énergie focalisée illustrant un mode de réalisation de l'art antérieur,
- La figure 2 est une coupe schématique d'une pièce obtenue par un procédé de fabrication additive par dépôt de matière sous énergie focalisée illustrant un mode de réalisation de l'art antérieur, et
- La figure 3 est une coupe schématique d'une pièce obtenue par un procédé de fabrication additive par dépôt de matière sous énergie focalisée illustrant un mode de réalisation de l'invention.

Comme illustré sur la figure 3, un procédé de fabrication additive par dépôt de matière sous énergie focalisée permet d'obtenir une pièce 20 en empilant des couches de matière 22 obtenues par fusion de fils 24 juxtaposés grâce à une source d'énergie focalisée.

Selon un mode opératoire, la source d'énergie focalisée génère un faisceau d'énergie présentant un point d'impact dans une zone d'impact située sur un substrat et au niveau de laquelle est apportée la matière sous la forme d'au moins un fil 24. Généralement, la zone d'impact est située dans une atmosphère contrôlée présentant au moins une caractéristique contrôlée parmi la composition gazeuse, la cinématique des gaz, la pression ou la température par exemple.

Le substrat peut être un support 26 ou une couche de matière 22 déjà déposée de la pièce 20. Le faisceau d'énergie peut être un faisceau laser, un faisceau d'électrons, un faisceau plasma ou autres.

Un dispositif de fabrication pour la mise en œuvre du procédé de fabrication comprend, en plus de la source d'énergie focalisée, un système d'alimentation de matière configuré pour alimenter la zone d'impact en fil, un système de gestion d'atmosphère configuré pour gérer au moins une caractéristique de l'atmosphère contrôlée, au moins un système de déplacement configuré pour déplacer le substrat, la source d'énergie focalisée et/ou le système d'alimentation de matière ainsi qu'un système de commande configuré pour contrôler la source d'énergie focalisée, le système d'alimentation de matière, le système de gestion d'atmosphère et chaque système de déplacement.

Lors du procédé de fabrication, un grand nombre de paramètres doivent être contrôlés et commandés pour que la couche de matière 22 déposée présente au moins une caractéristique attendue. Certains paramètres contrôlés et commandés sont relatifs à la source d'énergie focalisée, au faisceau d'énergie, au système de déplacement supportant la source d'énergie focalisée, à la matière, au système d'alimentation de matière, au système de déplacement supportant le système d'alimentation de matière ainsi qu'au système de gestion d'atmosphère. Cette liste de paramètres à contrôler n'est pas exhaustive.

Lors de la fabrication de la pièce 20, une première couche de matière 22 est positionnée sur une surface S26 du support 26. Pour une même couche de matière 22, les fils 24 sont décalés selon une première direction D1, parallèle à la surface S26 du support 26. Les couches de matière 22 sont superposées les unes sur les autres selon une deuxième direction D2, perpendiculaire à la première direction D1, correspondant à la direction d'empilage des couches de matière 22. Tous les fils 24 sont déposés en suivant un profil de pose. Selon une configuration, le profil de pose est rectiligne et orienté selon une troisième direction dite direction longitudinale. Un plan transversal correspond à un plan perpendiculaire à la direction longitudinale.

La pièce 20 obtenue à l'issue du procédé de fabrication additive présente une première face 20.1 en contact avec la surface S26 du support 26, une deuxième face 20.2 correspondant à une face de la dernière couche de matière 22 déposée sensiblement parallèlement à la première face 20.1 et opposée à cette dernière ainsi que des première et deuxième faces latérales 20.3, 20.4 reliant les première et deuxième faces 20.1, 20.2. Les première et deuxième faces latérales 20.3, 20.4 ne sont pas parfaitement planes et présentent des ondulations 28, comme illustré sur la figure 3.

Selon une configuration, les première et deuxième faces 20.3, 20.4 sont sensiblement parallèles à la deuxième direction D2 (correspondant à la direction d'empilage des couches de matière 22) et perpendiculaires à la surface S26 du support 26.

Quel que soit le mode de réalisation, la pièce 20 présente une surface libre S20, qui n'est pas en contact avec le support 26. Selon l'exemple visible sur la figure 3, la surface libre S20 correspond à la somme de la deuxième face 20.2 et des faces latérales 20.3, 20.4.

Selon une configuration, la pièce 20 obtenue à partir du procédé de fabrication additive présente des sections transversales constantes selon la direction longitudinale.

Selon une particularité de l'invention, la pièce 20 obtenue par le procédé de fabrication additive comprend, dans des plans transversaux (perpendiculaires à la direction de pose des fils), au moins une zone principale 30 réalisée à partir d'au moins un premier fil 24 présentant une première section transversale importante ainsi qu'au moins une zone périphérique 32 réalisée à partir d'au moins un deuxième fil 24' présentant une deuxième section transversale différente et inférieure à la première section transversale du premier fil 24, ladite zone périphérique 32 recouvrant au moins partiellement la surface libre S20 de la pièce 20. Selon une configuration, les premier et deuxième fils 24, 24' sont déposés selon des directions de pose parallèles. Selon d'autres configurations, les premier et deuxième fils 24, 24' sont déposés selon des directions de pose sécantes qui peuvent éventuellement être perpendiculaires.

L'utilisation de premiers fils 24 avec une première section importante permet d'obtenir une cadence de production élevée.

Le procédé de fabrication additive utilise un premier jeu de paramètres pour déposer les premiers fils 24 permettant d'obtenir une cadence de production élevée.

L'utilisation de deuxièmes fils 24' avec une deuxième section réduite permet de réduire l'amplitude E1 des ondulations 28, l'amplitude correspondant à l'écart entre les creux et les bosses des ondulations 28.

Le procédé de fabrication additive utilise un deuxième jeu de paramètres, différent du premier, pour déposer les deuxièmes fils 24' même si ce deuxième jeu de paramètres conduit à une cadence de production moindre que le premier jeu.

Selon un mode de réalisation, la pièce 20 comprend deux zones périphériques 32, une pour chacune des première et deuxième faces latérales 20.3, 20.4 de la pièce 20. Les deux zones périphériques 32 recouvrent la totalité des première et deuxième faces latérales 20.3, 20.4.

Selon un mode de réalisation, la première section transversale du premier fil 24 est circulaire et présente un diamètre supérieur ou égal à 1 mm. La deuxième section transversale du deuxième fil 24' est circulaire et présente un diamètre inférieur ou égal à 0,8 mm.

Selon un autre mode de réalisation, la première section transversale du premierfil 24 présente un diamètre supérieur ou égal à 3,2 mm. La deuxième section transversale du deuxième fil 24' présente un diamètre inférieur ou égal à 1,6 mm.

Le deuxième fil 24' présente un diamètre inférieur ou égal à un coefficient de 0,8 fois celui du premier fil 24. Plus le premier fil 24 présente un diamètre important, plus ce coefficient est réduit.

Généralement, la première section transversale du premier fil 24 présente un diamètre compris entre 1 et 8 mm. La deuxième section transversale du deuxième fil 24' présente un diamètre compris entre 0,8 et 3,2 mm.

Selon une configuration, la zone principale 30 comprend un empilage de plusieurs couches 22 de premier fils 24 et chaque zone périphérique 32 comprend un empilage de deuxièmes fils 24'. La pièce 20 peut comprendre plusieurs surfaces libres S20, comme cinq surfaces libres S20 dans le cas d'un parallélogramme, une, certaines ou toutes ces surface(s) libre(s) étant recouverte(s) de deuxième fils 24'.

Selon un premier mode opératoire, le procédé comprend plusieurs étapes de réalisation d'une couche de premiers fils 24, lors de chacune desquelles des premiers fils 24 sont juxtaposés les uns à côté des autres, ainsi que plusieurs étapes de pose des deuxièmes fils 24', une étape après chaque étape de réalisation d'une couche de premiers fils 24, lors de chacune desquelles au moins un deuxième fil 24' est posé à chacune des extrémités de la couche de premiers fils 24 juste réalisée. Lors de la réalisation des zones principale et périphériques 30, 32, la pièce 20 est orientée de la même manière.

Selon un deuxième mode opératoire, le procédé comprend une première étape de réalisation d'un empilage de couches de premiers fils 24 lors de laquelle toutes les couches de la zone principale 30 sont réalisées puis, pour chacune des zones périphériques 32, une étape de dépose des deuxièmes fils 24'. Lors de l'étape de dépose des deuxièmes fils 24', ces derniers sont juxtaposés les uns à côté des autres de manière à recouvrir l'une des faces latérales 20.3, 20.4.

Selon ce deuxième mode opératoire, la pièce 20 est orientée d'une première manière, la première face 20.1 étant sensiblement horizontale, lors de la première étape de réalisation de l'empilage des couches de premiers fils 24 de la zone principale 30. A l'issue de cette étape, la pièce 20 est pivotée de manière à ce que la face latérale à recouvrir de deuxièmes fils 24' soit sensiblement horizontale et orientée vers le haut. Une première zone périphérique est alors réalisée. Après la réalisation de cette première zone périphérique 32, la pièce 20 est pivotée d'un angle compris entre 15 et 180° (en fonction de la géométrie de la pièce) de manière à ce que la face latérale à recouvrir de deuxièmes fils 24' soit sensiblement horizontale et orientée vers le haut. La deuxième zone périphérique 32 est alors réalisée. Bien entendu, l'invention n'est pas limitée à ces modes opératoires pour la réalisation des zones principale et périphérique(s) 30, 32.

La pièce finale 20' obtenue à partir de la pièce 20 brute, obtenue par le procédé de fabrication additive, peut correspondre à la pièce 20 brute, à la pièce 20 brute et au support 26, à la pièce 20 et une partie du support 26, à une partie de la pièce 20 brute seule, à une partie de la pièce 20 brute et au support 26 ou à une partie de la pièce 20 brute et une partie du support 26. Ainsi, à l'issue du procédé de fabrication additive, la pièce 20 obtenue peut rester brute ou être usinée.

## Revendications

1. Procédé de fabrication additive, par dépôt de matière sous énergie focalisée, d'une pièce (20) comportant des couches de matière (22) obtenues par fusion de fils (24, 24') grâce à une source d'énergie focalisée, chaque couche de matière (22) comportant plusieurs fils (24, 24') juxtaposés déposés selon une direction de pose, la pièce (20) obtenue comportant une surface libre (S20) ; **caractérisé en ce que** le procédé de fabrication additive permet d'obtenir une pièce (20) comportant au moins une zone principale (30) réalisée à partir d'au moins un premier fil (24) qui présente une première section transversale de diamètre supérieur ou égal à 1 mm ainsi qu'au moins une zone périphérique (32) réalisée à partir d'au moins un deuxième fil (24') qui présente une deuxième section transversale circulaire et présentant un diamètre inférieur ou égal à un coefficient de 0,8 fois le diamètre du premier fil (24), ladite zone périphérique (32) recouvrant au moins partiellement la surface libre (S20) de la pièce (20) et **en ce que** plus le premier fil (24) présente un diamètre important et plus le coefficient est réduit.

2. Procédé de fabrication additive selon la revendication 1, **caractérisé en ce que** la première section transversale du premier fil (24) présente un diamètre compris entre 1 et 8 mm et **en ce que** la deuxième section transversale du deuxième fil (24') présente un diamètre compris entre 0,8 et 3,2 mm.

3. Procédé de fabrication additive selon la revendication 1 ou 2, la pièce (20) présentant une première face (20.1) en contact avec une surface (S26) d'un support (26), une deuxième face (20.2) correspondant à une face d'une dernière couche de matière (22) déposée, opposée à ladite première face (20.1), ainsi que des première et deuxième faces latérales (20.3, 20.4) reliant les première et deuxième faces (20.1, 20.2) ; **caractérisé en ce que** la pièce (20) comprend deux zones périphériques (32), une pour chacune des première et deuxième faces latérales (20.3, 20.4) de la pièce (20).

4. Procédé de fabrication additive selon la revendication précédente, **caractérisé en ce que** les deux zones périphériques (32) recouvrent la totalité des première et deuxième faces latérales (20.3, 20.4).

5. Procédé de fabrication additive selon l'une des revendications précédentes, **caractérisé en ce que** le procédé utilise un premier jeu de paramètres pour déposer les premiers fils (24), permettant d'obtenir une cadence de production élevée, ainsi qu'un deuxième jeu de paramètres, différent du premier, pour déposer les deuxièmes fils (24').

6. Procédé de fabrication selon la revendication 4 ou 5, **caractérisé en ce que** le procédé comprend plusieurs étapes de réalisation d'une couche de premiers fils (24), lors de chacune desquelles des premiers fils (24) sont juxtaposés les uns à côté des autres, ainsi que plusieurs étapes de pose des deuxièmes fils (24'), une étape après chaque étape de réalisation d'une couche de premiers fils (24), lors de chacune desquelles au moins un deuxième fil (24') est posé à chacune des extrémités de la couche de premiers fils (24) juste réalisée.

7. Procédé de fabrication selon la revendication 4 ou 5, **caractérisé en ce que** le procédé comprend une première étape de réalisation d'un empilage de couches de premiers fils (24) lors de laquelle toutes les couches de la zone principale (30) sont réalisées puis, pour chacune des zones périphériques (32), une étape de pose des deuxièmes fils (24').

8. Procédé de fabrication selon la revendication précédente, **caractérisé en ce que** la pièce (20) est orientée d'une première manière lors de la première étape de réalisation de l'empilage des couches de premiers fils (24) de la zone principale (30), **en ce qu'**à l'issue de cette première étape, la pièce (20) est pivotée de manière à ce que la face latérale à recouvrir de deuxièmes fils (24') soit horizontale et orientée vers le haut lors d'une première étape de pose des deuxièmes fils (24') d'une première zone périphérique (32) et **en ce qu'**à l'issue de cette première étape de pose des deuxièmes fils (24') de la première zone périphérique (32), la pièce (20) soit pivotée de manière à ce que la face latérale à recouvrir de deuxièmes fils (24') soit horizontale et orientée vers le haut lors d'une deuxième étape de pose des deuxièmes fils (24') d'une deuxième zone périphérique (32).

9. Pièce obtenue à partir du procédé de fabrication additive selon l'une des revendications précédentes.
